Europäisches Patentamt

European Patent Office

Office européen des brevets

(19)

(11) Publication number: **0 047 055**
**B1**

(12) **EUROPEAN PATENT SPECIFICATION**

(45) Date of publication of patent specification: **13.06.84**

(51) Int. Cl.³: **F 16 K 15/04**

(21) Application number: **81303227.3**

(22) Date of filing: **14.07.81**

(54) **Valves.**

(30) Priority: **28.08.80 US 182235**

(43) Date of publication of application:
**10.03.82 Bulletin 82/10**

(45) Publication of the grant of the patent:
**13.06.84 Bulletin 84/24**

(84) Designated Contracting States:
**DE FR GB IT**

(56) References cited:
**FR - A - 2 328 864**
**US - A - 2 481 482**
**US - A - 3 447 564**

(73) Proprietor: **HOUDAILLE INDUSTRIES, INC.**
**1 Financial Plaza**
**Fort Lauderdale Florida 33394 (US)**

(72) Inventor: **Snow, John P.**
**7023 South Boyden**
**Sagamore Hills Ohio 44067 (US)**

(74) Representative: **Oliver, Roy Edward et al,**
**POLLAK MERCER & TENCH High Holborn House**
**52-54 High Holborn**
**London WC1V 6RY (GB)**

Courier Press, Leamington Spa, England.

## Description

This invention relates to valves and, more particularly, to ball relief valves.

Ball valves having a valve body with an internal valve seat closable by a spring urged ball are well-known to the art and have been extensively used for many years. Such devices usually have a passageway through the body with a reduced diameter valve seat formed interiorly of the body either by a ledge formed in the passageway or by the insertion of a separate valve seat member. The ball is placed downstream of the valve seat and is spring urged toward the valve seat. In such constructions, sealing occurs between the periphery of the valve seat and the outer surface of the ball. When pressure builds on the upstream side of the seat to an extent where the total pressure against the exposed surface of the ball interior of the seat inner periphery exceeds the pressure of the spring against the ball, the ball will unseat and pressure will be relieved past the ball.

Such known devices have a singular disadvantage in that in order to provide a good seal both the valve seat and the ball surface must be highly polished by machining or coining or the valve can leak. Even when properly manufactured such valves are not considered to be air tight.

In order to reduce this, it has been known to use frustoconical valve seats and non-ball valves. Such non-ball valves have included devices having frustoconical exterior surfaces having tapers substantially the same as the taper of the frustoconical valve seat, tapered stoppers having tapers different from the taper of the valve seat and, in some instances, stoppers having additional sealing members such as O-rings. Such a non-ball valve is shown, for example, in US—A—2,481,482, which illustrates a check valve utilising a movable, conical valve element and an elastic O-ring thereon. The O-ring seals the valve, when in its closed position, and is slidably movable on a tapered stem of the valve element, when the valve opens, to permit fluid to flow around the outside of the O-ring. On closure of the valve, the elasticity of the O-ring causes it to return to its initial sealing position, by sliding down the surface of the tapered stem of the valve element. Such a valve however, has a further disadvantage in that it has two seal surfaces, i.e. at the juncture of the O-ring seal with the valve seat and at the wall of the O-ring groove in the valve element.

In FR—A—2328864, there are described various forms of clack box for reciprocating pumps, such boxes incorporating at least one ball-operated delivery or suction valve. One embodiment illustrated comprises a pair of balls of different diameters located within a frustoconical valve seat in the bore of the valve body. A member, received in the valve seat between the balls, has a frustoconical outer periphery which has a larger diameter end where diameter is greater than that of the smaller diameter end of the seat and is less than that of the larger diameter end of the seat. The ball located downstream of the member has a diameter which is greater than a diameter of the seat downstream of the larger diameter end of the member. The member, intermediate the two balls, provides no sealing function for the valve but merely acts as a buffer to prevent excessive impacts between the balls during high speed operation of the valve. Preferably, the member is made of a plastics material to avoid damaging the balls.

Although these known valves have worked as both pop relief valves, for the most part, they still rely upon the use of metallic sealing members whether they be of the ball or non-ball variety of valve.

Elastomeric sealing members, such as O-rings and synthetic or natural rubber balls, have a known disadvantage in that they will cold flow under the influence of pressure. Over prolonged periods of time this can result in the elastomeric sealing member either being extruded through the valve seat opening or being distorted into the valve seat to a point where it will no longer seal properly and will not open at the desired pressure differential. It would therefore be an advance in the art to provide a pressure release valve or pop valve which utilizes an elastomeric seal member to reduce the expense necessary in production of polished mating seal faces but which, however, is provided with means preventing distortion or cold flow of the elastomeric member from occurring, and preventing extrusion of the elastic member through the valve seat.

These objectives are accomplished in this invention which utilizes a frustoconical member adjacent an elastomeric seal ball, the member having the larger diameter end of its frustoconical outer periphery sealingly engageable with the valve seat, with the spring urging the seal ball against the member and, as a consequence, the member against the seat to sealingly engage the larger diameter end of the periphery of the member therewith.

Preferably, the larger diameter end of the frustoconical member has a central depression in which the seal ball is seated. The dimension(s) of the depression with respect to the ball may be such that the full diameter of the ball cannot be received therein. Also, the outer periphery at the larger diameter end of the member may be circumferentially expandable to provide a lipseal.

In a further embodiment of the invention, the elastomeric seal ball is used in conjunction with a standard metallic ball seal whereby two axially spaced seals are provided within a single valve body. A spring acting between the member and the metallic ball seats the metallic ball against its respecttive seat while a secondary spring acting between the elastomeric ball and an adjustable stop urges the elastomeric ball and the member to their sealing positions.

It is therefore an object of this invention to provide an improved valve design utilizing an elastomeric seal ball in association with a metallic member which also performs a sealing function but which also prevents cold flow or extrusion of the ball under pressure.

Other objects, features and advantages of the invention will be readily apparent from the following description of preferred embodiments thereof, the description being given by way of example and taken in conjunction with the accompanying drawings, in which:

Figure 1 is a cross-sectional view of a valve;

Figure 2 is a view similar to Figure 1 but illustrating a modification of the valve; and

Figure 3 is a fragmentary enlarged cross-sectional view of a main seal and back-up member of the valve.

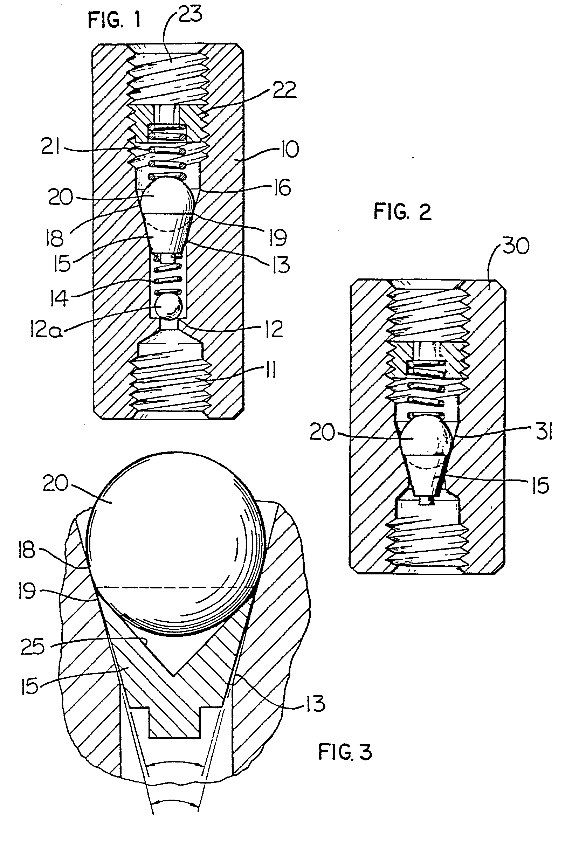

As best shown in Figure 1, the seal of this invention includes a valve body 10 having a bore 11 therethrough. In the embodiment illustrated in Figure 1, the bore 11 has two axially spaced valve seats 12 and 13. As shown, the valve seat 12 may be a standard ledge seat or, as is known to the art, may be formed with a slight chamfer surface at the seat, and may, if desired, be formed as a separate insert. A metallic ball 12a is urged against the seat 12 by a spring 14.

The valve seat 13 is a frustoconical seat and may be formed of the material of the valve body as illustrated, or may, if desired, be formed as an insert. A back-up member 15 is provided, having a frustoconical outer periphery. The back-up member 15 is dimensioned to be received within the valve seat 13 intermediate the axial ends thereof. The valve seat 13 and back-up member 15 are dimensioned such that the larger diameter axial end 16 of the valve seat is beyond the point of greatest penetration of the back-up member 15, so that with the back-up member 15 fully seated in the valve seat 13, a portion 18 of the valve seat extends downstream of the large diameter axial end 19 of the back-up member 15.

An elastomeric seal ball 20 is urged by spring 21 against the back-up member 15 and has a diameter greater than the diameter of the larger diameter end 19 of the back-up member and is dimensioned with respect to the seat 13 to sealingly contact the portion 18 beyond the larger diameter axial end of the back-up member 15, when the back-up member is seated in the valve seat 13. Spring 21 is adjustable by means of an adjusting plug 22 threaded into the threaded opening 23 of the bore 11.

In the embodiment illustrated in Figure 1, two valves are provided in a common valve body, the valves being respectively the ball 12a and seat 12 and the ball 20 and the seat 13. Back-up member 15, although seated in the seat 13, may, if desired, be made with an unpolished surface and therefore, although forming a seal of sorts, does not have to be a high performance seal member because the ball 20, being elastomeric, would be urged into sealing engagement with the seat portion 18 irrespective of minor surface irregularities therein. In this manner, the valve illustrated is less expensive to manufacture than heretofor used ball or conical stopper valves, since the seat 13 and back-up member 15 do not have to be high machined.

As best illustrated in Figure 3, the larger diameter axial end 19 of the back-up member 15 is provided with an axial depression 25 which may, as illustrated, be formed by a simple conical drill or it may be fully contoured to the normal radius of the ball 20. Preferably, the tapers of the seat 13 and back-up member 15 are different, with the back-up member having a larger taper. In the embodiment shown, the back-up member 15 has a 32° conical taper. The exact taper is not critical and tapers between 20° and 120° may be used. The difference in taper between the seat 13 and back-up member 15 may be from .25° to 10°. The larger the difference and the larger the diameter of the depression 25, the more the axial end 19 will act as a lip seal against the valve seat. The use of tapers over 20° and the use of different tapers on the back-up member 15 and seat 13 assure that the seal at the back-up seal interface is self-releasing and not self-holding and that the seal contact will be at the axial end of the back-up member to prevent extrusion of the ball 20 between the seat and back-up member. A 46° taper seat and 47°—48° taper back-up member is also useful.

Preferably, as illustrated in Figure 3, the dimensions of the ball 20 with respect to the seat 13 are such that sealing occurs along a cordal line not at the diameter of the ball. This allows a good seal to be made if the ball 20 becomes slightly compressed or obrounded due to the pressure of the spring 21.

The ball 20 may, depending upon various factors such as pressure and the composition of the fluid or gas to be sealed, be formed of different elastomeric material such as, Teflon, a registered trademark of the I.E. DuPont De Nemours Company, Viton, Urethane, Nylon, etc. The preferred materials will be chosen such that the ball 20 creates, in use, a single circumferential seal surface and is not flowable into any crack or opening between the back-up member 15 and the seat 13 at the axial end 19.

In one embodiment of this invention, a valve capable of being used in relatively high pressure applications without leak was constructed with an elastomeric ball 20 formed of Viton artificial rubber having a Shore "A" durometer hardness of between 70 and 90, and preferably, approximately 80. A spring, having a spring rate of approximately 26 pounds per inch, was used for the spring 21. A spring having a spring rate of approximately 7 pounds per inch was used as the spring 14. A 30° conical taper seat was provided for seat 13 having a small diameter opening on the downstream side of approximately .25″ (.64 cm). This compared with an approximately .125″ (.32 cm) opening for seat 12. A .188″ (4.8 cm) diameter metal ball was provided for the valve ball 12a, whereas the elastomeric ball 20 had a diameter of approximately .375″ (.95 cm).

Figure 2 illustrates a valve 30 which is substantially identical to the valve of Figure 1, except that a single conical valve seat 31 is provided. The valve seat 31 has an associated elastomeric ball 20 and back-up member 15, substantially the same as the valve shown in Figure 1. The principal difference between the valve of Figure 1 and Figure 2 is the elimination of the second ball valve 12, 12a.

It can therefore be seen that this invention provides an improved elastomeric ball valve, due to the provisions of a frustoconical seat 13, 31 and a frustoconical back-up member 15, which may be metallic, whereby the elastomeric ball 20 can be used as the primary seal member without danger of extrusion of the ball 20 through the seat 13. The back-up member 15, having a contoured surface for receipt of the ball 20, assists in both preventing extrusion of the ball and preventing great deformation of the ball, while allowing the ball 20 to deform slightly to compensate for any irregularities in the surface of the seat portion 18.

It should be understood that the valve body 10, 30 may be an independent body or may be formed as a part of another device.

**Claims**

1. A valve comprising:
(a) a valve body (10) having a bore (11) therethrough;
(b) a frustoconical valve seat (13) in the bore (11) intermediate the ends thereof;
(c) a member (15) receivable in the seat (13) and having a frustoconical outer periphery which has a larger diameter end (19), whose diameter is greater than that of the small diameter end of the seat (13) and is less than that of the larger diameter end (16) of the seat (13);
(d) a seal ball (20) located adjacent the larger end of the member (15) and having a diameter which is greater than a diameter of the seat (13) adjacent the larger diameter end (19) of the member (15);
characterised in that the ball is elastomeric and a spring (21) urges the ball (20) against the seat (13) to provide a seal therewith, that the larger diameter end of the frustoconical outer periphery of the member (15) is sealingly engageable with the seat (13), and that the spring (21) urges the ball (20) against the member (15) and, as a consequence, the member (15) against the seat (13) with said larger diameter end of its periphery in sealing engagement therewith.
2. A valve according to claim 1, characterized in that the larger diameter end (19) of the member (15) has a central depression (25) in which the seal ball (20) is seated.
3. A valve according to claim 2, characterized in that the outer periphery at the larger diameter end (19) of the member (15) is circumferentially expandable to provide a lip seal.
4. A valve according to claim 1, 2 or 3, characterized in that the member (15) has a greater cone angle than that of the seat (13).
5. A valve according to any preceding claim, characterized in that the seal ball (20) seals against the seat (13) along a non-diametric cord through the ball (20).
6. A valve according to any preceding claim, characterized in that the seal ball (20) has a Shore "A" durometer hardness greater than 70.
7. A valve according to any preceding claim, characterized in that the bore (11) has a second valve seat (12) spaced from the frustoconical valve seat (13) near the smaller end of the member (15), with a second seal ball (12a) being urged against the second valve seat (12) by a second spring (14) entrapped between the second ball (12) and the member (15).
8. A valve according to any preceding claim, characterized in that the bore (11) is provided with an internal thread (23) and an externally threaded plug (22) which has a bore therethrough and is meshed with the internal thread (23) of the bore (11), thereby providing an adjustable stop for the first-mentioned spring (21).
9. A valve according to any preceding claim, characterized in that the member (15) is metallic.

**Patentansprüche**

1. Ventil, bestehend aus
(a) einem Ventilkörper (10) mit durchlaufender Bohrung (11),
(b) einem kegelstumpfförmigen Ventilsitz (13) in der Bohrung (11) zwischen deren Enden,
(c) einem Organ (15), das in den Sitz (13) aufnehmbar ist und einen kegelstumpfförmigen Außenmantel besitzt, der ein Ende (19) mit größerem Durchmesser aufweist, der größer ist als derjenige des Endes des Sitzes (13) mit dem kleineren Durchmesser und kleiner ist als derjenige des Endes (16) des Sitzes (13) mit dem größeren Durchmesser,
(d) einer an dem weiteren Ende des Organs (15) anliegenden Dichtungskugel (20), deren Durchmesser größer ist als ein Durchmesser des Sitzes (13) neben dem Ende (19) des Organs (15) mit dem größeren Durchmesser, dadurch gekennzeichnet, daß die Kugel (20) aus elastischem Material besteht und eine Feder (21) die Kugel (20) auf den Sitz (13) drückt, um eine Abdichtung mit diesem herbeizuführen, daß bei dem Organ (15) das Ende mit dem größeren Durchmesser des kegelstumpfförmigen Außenmantels dichtend gegen den Sitz (13) führbar ist, und daß die Feder (21) die Kugel (20) gegen das Organ (15) und dadurch das Organ (15) gegen den Sitz (13) drückt, wobei das Ende mit dem größeren Durchmesser an diesem Mantel sich dichtend gegen den Sitz (13) legt.

2. Ventil nach Anspruch 1, dadurch gekennzeichnet, daß an dem Organ (15) das Ende (19) mit dem größeren Durchmesser eine mittige Eintiefung (25) aufweist, in der die Dichtungskugel (20) ruht.

3. Ventil nach Anspruch 2, dadurch gekennzeichnet, daß an dem Organ (15) der Außenmantel des Endes (19) mit dem größeren Durchmesser in Umfangsrichtung dehnbar ist und eine Lippendichtung bildet.

4. Ventil nach Anspruch 1, 2 oder 3, dadurch gekennzeichnet, daß das Organ (15) einen größeren Kegelwinkel besitzt als der Sitz (13).

5. Ventil nach einem der vorhergehenden Ansprüche, dadurch gekennzeichnet, daß die Dichtungskugel (20) sich gegen den Sitz (13) längs einer Linie legt, die nicht auf einem Durchmesserkreis liegt.

6. Ventil nach einem der vorhergehenden Ansprüche, dadurch gekennzeichnet, daß die Dichtungskugel (20) eine Shorehärte "A" größer als 70 hat.

7. Ventil nach einem der vorhergehenden Ansprüche, dadurch gekennzeichnet, daß die Bohrung (11) im Abstand von dem kegelstumpfförmigen Ventilsitz (13) in der Nähe des dünneren Endes des Organs (15) einen zweiten Ventilsitz (12) aufweist gegen den eine zweite Dichtungskugel (12a) von einer Feder (14) gedrückt wird, die zwischen der zweiten Kugel (12a) und dem Organ (15) eingeschlossen ist.

8. Ventil nach einem der vorhergehenden Ansprüche, dadurch gekennzeichnet, daß die Bohrung (11) mit einem Innengewinde (23) und einem eine durchlaufende Bohrung besitzenden Stopfen (22) mit Außengewinde versehen ist, das in das Innengewinde (23) der Bohrung (11) greift, so daß ein einstellbarer Anschlag für die erstgenannte Feder (21) entsteht.

9. Ventil nach einem der vorhergehenden Ansprüche, dadurch gekennzeichnet, daß das Organ (15) aus Metall besteht.

**Revendications**

1. Un clapet comprenant:

(a) un corps de clapet (10) ayant un perçage (11) qui le traverse;

(b) un siège de clapet tronconique (13) dans le perçage (11), et entre les extrémités de ce dernier;

(c) un organe (15) destiné à être reçu dans le siège (13) et ayant une périphérie externe tronconique qui présente une extrémité de plus grand diamètre (19), dont le diamètre est plus grand que celui de l'extrémité de plus petit diamètre du siège (13) et est inférieur à celui de l'extrémite de plus grand diamètre (16) du siège (13);

(d) une bille d'obturation (20) en position adjacente à l'extrémité de plus grand diamètre de l'organe (15) et ayant un diamètre qui est supérieur à un diamètre du siège (13) en position adjacente à l'extrémité de plus grand diamètre (19) de l'organe (15);

caractérisé en ce que la bille est en élastomère, et un ressort (21) sollicite la bille (20) contre le siège (13) afin de réaliser un joint étanche avec lui, en ce que l'extrémité de plus grand diamètre de la périphérie externe tronconique de l'organe (15) est destinée à venir en contact étanche avec le siège (13), et en ce que le ressort (21) sollicite la bille (20) contre l'organe (15) et, en conséquence, l'organe (15) contre le siège (13) de sorte que ladite extrémité de plus grand diamètre de sa périphérie soit en contact étanche avec ce dernier.

2. Un clapet selon la revendication 1, caractérisé en ce que l'extrémité de plus grand diamètre (19) de l'organe (15) a une dépression centrale (25) dans laquelle la bille d'obturation (20) est appliquée.

3. Un clapet selon la revendication 2, caractérisé en ce que la périphérie externe, au niveau de l'extrémité de plus grand diamètre (19), de l'organe (15) est circonférentiellement expansible afin de réaliser un joint à lèvre.

4. Un clapet selon la revendication 1, 2 ou 3, caractérisé en ce que l'organe (15) a un angle de conicité plus grand que celui du siège (13).

5. Un clapet selon l'une quelconque des revendications précédentes, caractérisé en ce que la bille d'obturation (20) réalise une fermeture étanche contre le siège (13) le long d'une ligne circulaire qui n'est pas située dans un plan diamétral de la bille (20).

6. Un clapet selon l'une quelconque des revendications précédentes, caractérisé en ce que la bille d'obturation (20) a une dureté Shore "A" au duromètre supérieure à 70.

7. Un clapet selon l'une quelconque des revendications précédentes, caractérisé en ce que la perçage (11) a un second siège de clapet (12) espacé du siège de clapet tronconique (13), au voisinage de l'extrémité de plus petit diamètre de l'organe (15), une seconde bille d'obturation (12a) étant sollicitée contre le second siège de clapet (12) par un second ressort (14) enfermé entre la seconde bille (12) et l'organe (15).

8. Un clapet selon l'une quelconque des revendications précédentes, caractérisé en ce que le perçage (11) est muni d'un taraudage interne (23) et d'un bouchon (22) extérieurement fileté, qui est traversé par un perçage et est engagé dans le taraudage interne (23) du perçage (11), en réalisant ainsi une butée réglable pour le premier ressort (21) mentionné.

9. Un clapet selon l'une quelconque des revendications précédentes, caractérisé en ce que l'organe (15) est métallique.

FIG. 1

23
22
21
10
20
16
18
19
15
13
14
12a
12
11

FIG. 2

30
20
31
15

20
18
19
25
15
13

FIG. 3